# EUROPEAN PATENT APPLICATION

(11) **EP 1 705 908 A2**
(43) Date of publication of application: **27.09.2006**
(21) Application number: 06111467.4
(22) Date of filing: 21.03.2006
(51) Int. Cl.: H04N 5/76

(54) **Extensible content identification and indexing**

(30) Priority: 22.03.2005 US 86147
(71) Applicant: MICROSOFT CORPORATION, Redmond, Washington 98052-6399 (US)
(72) Inventor: Kotzenberg, Bernhard G., Redmond, WA 98052 (US); Hofmeyr, Jan M., Redmond, WA 98052 (US); Bradstreet, John, Redmond, WA 98052 (US); Gates, Matthijs A., Redmond, WA 98052 (US); Pritchett, Thaddeus C., Redmond, WA 98052 (US)
(74) Representative: Zimmer, Franz-Josef

(57) **Abstract**

Innovative techniques for identifying and distinguishing content, such as commercials, can be used with means for marking key frames within the commercials to facilitate replacement of commercials and other programming segments in such a way as to provide improved focus and relevance for targeted advertising based on known and/or dynamic conditions. The identification of commercial features can also be used to provide improved trick play functionality while the commercial or other programming is rendered.

## Description

### BACKGROUND OF THE INVENTION

### 1. The Field of the Invention

The present invention relates to the general field of broadcast media and, more particularly, to marking of content that is embedded in broadcast media.

### 2. Background and Relevant Art

In today's world of convenience, personal video recorders (PVRs) have been developed to permit essentially random access and skipping of television content. Commercials, however, are an exception and cannot easily be skipped over because they are not embedded with any distinguishing features or characteristics that can be used to easily identify where they begin and end within a broadcast segment. In this regard, commercials are viewed by consumers as problematic because many consumers would prefer to skip over many commercials to more conveniently watch the programming the commercials are embedded in and without having to endure lengthy commercial interruptions.

Broadcasters and advertisers, on the other hand, have endeavored intensely to prevent and limit any type of skipping of their commercials and by whatever means possible. The reason for this is that advertisers want to insure that they get as many impressions and, hopefully, as many corresponding sales as possible. For at least this reason, advertisers have been very reluctant to provide any information that may identify and distinguish commercial segments from the content they are displayed with.
In fact, they have even gone so far, through lobbying, to modify laws and standards to preserve their ability to indistinguish and essentially hide their commercials within the programming they are provided within.

In the long run, however, the advertiser's policy of trying to prevent commercials from being distinguished from the broadcast content, in which case it could easily be skipped, is exactly opposite to their desire to target advertising specifically to the various users and communities that might have an interest in their products, which could help lower their general costs and up their total sales. After all, if the advertisers don't identify and distinguish their content, the playback systems will be unable to track and index advertisements for improved and targeted placement for the particular customers that might actually have an interest in watching their commercials.

### BRIEF SUMMARY OF SOME EMBODIMENTS OF THE INVENTION

The present invention provides improved methods, systems and computer program products for helping achieve the common ground identified above, by providing innovative techniques for identifying and distinguishing content, such as commercials, while at the same time providing means for marking key frames within the commercials that will be rendered to make the desired commercial impressions. The innovative techniques encompassed within this invention also provide means for identifying and indexing commercials and other content in such a way that they can be dynamically replaced, as desired, to provide improved targeting and relevance based on known and/or dynamic conditions.

With the present invention, advertisers are provided secure ways identifying their commercials and are thereby rewarded with correspondingly rich sets of features that will provide the necessary incentives for the advertisers to indicate where their commercials are within a broadcast. With this identifying information, a user's viewing experience can also be more pleasurable, inasmuch as they will be able to skip over much of the advertising content they don't want to watch, and while enabling advertisers the ability to delivering more targeted and relevant advertisements.

Through the present invention, means are also provided for a consumer to quickly skip over portions of commercials that the user does not want to watch, while still enabling the advertiser to make an impression with their commercial. Accordingly, although consumers will still have to endure some advertising, it is believed that they will be more willing to suffer through directed ads when they can limit the commercial content that they have to watch, and while still protecting their privacy rights.

Methods of implementing the invention include marking and indexing techniques in which advertisements and other content is marked to identify particularly interesting points in a stream of content. Some of the interesting points that can be identified are key frames and the beginning and ending of a commercial segment. In some embodiments the key frames will be displayed, even when the remaining content of a commercial or other segment is skipped.

Licenses and rules governing the display of key frames as well as the replacement of content and other display functions can be tied directly to the disclosed means for providing the identifying information and in such a way that access to the identifying information will only be granted if the rules are followed. For example, the identifying information can be locked in a two part tagging scheme that includes Marks and corresponding Local identifiers (LIDs) that uniquely reference licenses that can be used to enforce the business rules. Even more particularly, the business rules can be enforced by encrypting the useful and identifying data provided by the Marks and LIDs, such that access to the information is only provided via the decryption ciphers and tokens that are obtained through license and agreement.

One of the other interesting aspects of the invention includes indexing and storing scenes and other segments of programming in such a way that they can be used to replace advertisements and other content in broadcast and recorded programming, based on known factors, and in such a way that the targeted advertising can be more focused and relevant to dynamic conditions, such as a time, season, holiday, current event, and any other condition or criteria that can be determined during the playback of recorded or time-shifted programming. The same principles can also be applied when the rendered programming is a live broadcast or other media that is displayed in real-time.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1 illustrates one embodiment of a network environment in which aspects of the invention can be practiced;

Figure 2 illustrates a flowchart of certain embodiments of the invention;

Figure 3 illustrates programming having a plurality of segments that have been marked according to some aspects of the invention with Marks and LIDs;

Figure 4 illustrates another embodiment of programming having a plurality of segments, including commercials that have been marked according to some aspects of the invention, and that can be replaced with other segments stored in an illustrated database; and

Figure 5 illustrates yet another embodiment of programming having a plurality of segments and that includes commercials that have been marked according to some aspects of the invention and that illustrates some methods for advancing forward and backward in the programming.

### DETAILED DESCRIPTION OF EMBODIMENTS OF THE INVENTION

The present invention extends to methods, systems and computer program products for providing extensible marking and indexing of content, such as advertisements, as well as corresponding techniques for modifying and rendering the marked and indexed content.

According to some embodiments, advertisements are marked with identifiers that identify the beginning, the ending and one or more key frames of an advertisement or other content. These identifications can also be encrypted in such a way that their discovery and use is restricted by license, so as to help prevent unauthorized access and use. It will also be appreciated that these marks do not have to be delivered from an external source. For instance, they can also be automatically generated by a system component in response to the content, such as, for example, by examining the audio, video, and other data streams for particular known patterns ('fingerprints').

Through at least the foregoing, the targeting of advertisements can be more focused to known and dynamic conditions. One or more advertisements can also be interchanged for one or more different advertisements that were previously embedded in a broadcast stream. These, as well as other features of the invention will be more fully described below.

As will be appreciated, the embodiments of the present invention may be practiced with a special purpose or general-purpose computer including various computer hardware, as discussed in greater detail below. Embodiments within the scope of the present invention can also include one or more computer-readable media for carrying or having computer-executable instructions or data structures stored thereon for implementing the methods of the invention.

Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those skilled in the art will appreciate that the invention may be practiced in network computing environments with many types of computer system configurations, including personal computers, hand-held devices, multi-processor systems, microprocessor-based or programmable consumer electronics, network PCs, minicomputers, mainframe computers, and the like. The invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

### NETWORK ENVIRONMENT

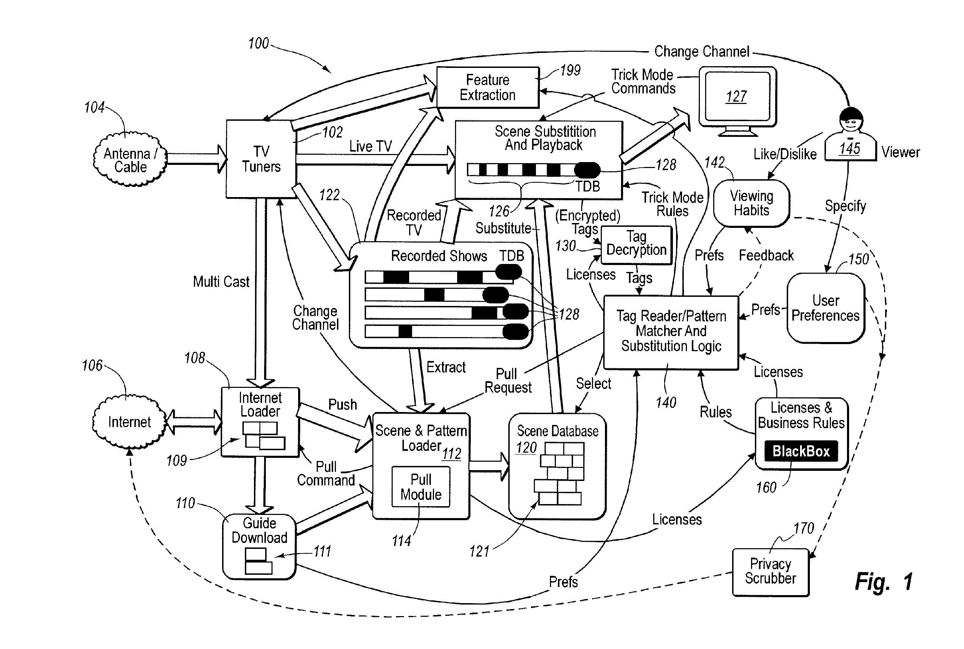

Attention will now be directed to Figure 1, which illustrates one embodiment of a system 100 in which the invention can be practiced. It will be appreciated, however, that this embodiment is merely illustrative and should not, therefore, be construed as limiting the scope of the invention. Accordingly, the invention can also be practiced in other systems and network environments in which more or fewer network elements are present.

As shown in Figure 1, the exemplary system 100 includes one or more TV tuners 102 that receive programming from one or more broadcast sources (not shown) through an antenna/cable or other network connection 104. The programming that is received can include any combination of multimedia content and advertising. The TV tuners 102 take the programming and turn it into a digital format. It will be appreciated that a plurality of different tuners 102 can be utilized to enable simultaneous viewing of different broadcasts.

As illustrated, programming can also be received through the Internet 106, or other connection, such as, for example, by an Internet loader 108. Although not necessarily, much of the programming 109 received over the internet is in a compressed file, such as an MPEG file or WMP file. Other data, which will be described in more detail below, (e.g., license files, requests, tags, key frames, replacement scenes, dynamic factor data, playback and replacement criteria, scene matching patterns, and so forth) can also be received through this connection, as well as the connection referenced above with tuners 102. In some embodiments, wherein a remote repository stores advertisements, this Internet connection can also be used to access the remotely stored advertisements and other data in real-time during processing of the received programming.

The guide download 110 is a media center that downloads large, location specific, database files 111 containing information about upcoming shows. In one embodiment, the data files 111 are contained in an XML database. However, it will be appreciated that other database formats can also be used. In addition to this information, downloaded files can also contain actual programming (WMP shows), screen shots, or active content (e.g., GDI+ web pages) to be used as replacement commercials or to modify portions of those commercials. At the guide download 110, show specific replacement preferences can also be delivered. For example, instructions clarifying rules for displaying and substituting programming segments (*e*.*g*., advertisements) are received and stored. One non-limiting example of a rule, for example, could be to display as many automobile commercials during a particular show as possible. The rules can be generic, or specific to a particular genre or theme, manufacturer, or product. Rules can also be specific to timing within a show itself, as well as timing during the day, week, month (or other calendar period, including holidays) when the show is actually played (such as when the show has been recorded and played at a later time).

In some embodiments, the guide download 110 also receives instructions or rules to embed certain scripts (*e*.*g*., GDI+ scripts) or text overlays to be provided simultaneously with other programming, rather than replacing or entirely interrupting the other programming.

In some embodiments, the guide download can also contain patterns (fingerprints) to look for in the audio, video, or data channels to scan for and use as marks.

The scene and pattern loader 112 includes a pull module 114 that manages all of the different scenes that can come from a variety of sources, as described above, to be used as replacement scenes to provide better targeting and/or relevance based on known and dynamic conditions. In some embodiments the scene loader 112 obtains replacement scenes from a currently recorded show, an alternate recorded show, a media guide (EPG), Internet sources (pulled and pushed), as well as other local and remote repositories. The scene and pattern loader 112 and pull module 114 are also responsible to locate and deliver licenses for the multimedia content (either pulled or pushed) in the same fashion.

In some embodiments, the scene and pattern loader 112 pull patterns to look for in the audio, video, or data streams to look for in content and to be used as Marks. In a typical environment, these patterns are stored in web pages along with the actions to perform (LIDS).

The scene database 120 is a local or remote repository of scenes or programming segments 121 that have been extracted from of previously recorded shows and programming 122, such as scenes, screen shots, chapters, advertisements, and so forth. This scene database 120 is one source of programming that can be used, if adequately indexed according to the invention, as a rich collection of scenes and advertisements for replacement. In some embodiments, replacement content is actually copied into programming, thereby replacing the other content that is being overwritten. In other embodiments, however, the replacement content remains in the scene database 120 or other location, and only a pointer or other reference is placed in the programming, so that during playback or rendering of the programming, the replacement content is played or rendered directly from the scene database 120 without being written into the programming stream and/or data structure it is played with.

As described below, content can be indexed and tagged with marks and LIDS corresponding to particularly interesting points in a program segment. In this regard, each program segment may include a plurality of different marks or identifiers. Accordingly, each program or segment can also include a corresponding Tag Data Base (TDB) 128 that essentially comprises an index of all the scene tags and identifiers found in the programming 122 and 126. The TBD 128 can be developed by the scene database for recorded shows 122, based on the identifiers provided with the programming, or the TBD 128 can be provided directly with the broadcast programming by the programming source or by a third party source.

One skilled in the art should realize that how the marks and LIDs are delivered and stored is not pertinent to the above point, just that they exist. They may be delivered in band with the video data, delivered over some out of band mechanism, or generated by looking for patterns in the video, audio, or data streams.

The scene substitution and playback module 124 comprises computer-executable instructions for replacing (by actual replacement or appropriate reference) sections of live or other viewed television programming 126 (whether displayed on a display 127, or not) with scenes and other segments 121 found in the scene database 120 or another repository. Many of the programming elements 126 (viewed) and 122 (recorded) are shown with multiple different segments. It will be appreciated that this is done to illustrate that a single program can include many different segments, including advertisements. In some embodiments, however, a program can include a single segment, rather than a plurality of segments, and any combination of new segments can be added in supplemental fashion to the original segment through the principles of the invention. Accordingly, although much of the description relates to replacing advertisements or segments, which are also referred to herein as scenes, it will be appreciated that the invention also extends to adding or removing segments from a program with or without overwriting or removing the existing segments in the program.

The scene substitution and playback 124 modules also manage the trick mode command changes for special scenes, as will be described in more detail below. (*e*.*g*., play input causes a commercial to skip back to the beginning, and so forth).

In some embodiments, the scene substitution and playback 124 also extracts and delivers the Tag Data Base (TDB) 128 to the logic module 140.

The tag decryption module 130 optionally decrypts tags that are encrypted to prevent unauthorized use of the tags and the content they include (e.g., the marks, LIDs and key frames and other information). Encrypting the tags can also help to prevent spoofing. According to some embodiments, the tag decryption module 130 only decrypts tags when it has first obtained licenses to do this. Licenses can be obtained from different sources and through different means, as generally suggested above.

The Feature Finder module (199) is responsible for scanning the audio, video, and/or data channels to create smaller easier to match structures. Examples vary from already existing but buried data such as the TV rating or channel number being viewed, to as basic as the closed caption text in a data channel or black screens in the video channel, to as complicated as the frequency based fingerprint matching in the audio or video channel. The goal is to produce a sequence of small features that, when looked at over a long enough period of time, create a unique or nearly unique pattern that identifies, or 'marks' that segment of the show. Multiple features may be combined to make the ability to generate this unique mark more robust. Obviously, delivering information specially designed to function as a unique mark is a subset of finding it.

The tag reader, pattern matcher and substitution logic modules 140 combine information on what is in a show, or programming that is being viewed, and identify what is available to substitute in its place. These modules also determine what is permissible to substitute and how any authorized replacement can be performed based on the rules, user preferences and viewing habits, as well as any other dynamic factors that are known. Some examples of dynamic factors include, but are not limited to time of a day, week or year, season, temperature, age of a recorded program, age of commercials within a recorded commercial, numbers of times and frequency a commercial has been played within a particular program or by the system in different programs, and so forth.

The viewing habits module 142 keeps track of what has been viewed by the viewer 145, either as a whole or on an individual viewer basis, or at least what is rendered on a display 127, inasmuch as there is no guarantee that the viewer 145 is actually watching what is being displayed. Viewer likes and dislikes can also be developed into sets of viewer heuristics and viewer preferences based on what is rendered and what viewer actions, if any, were taken during the playing of the programming. For example, the module 142 can track the duration of programming watched before a channel change, what other programming was available at the same time, what channels were changed to, and so forth. Viewer feedback can also be obtained in an overt and explicit manner, using any known techniques for querying and receiving feedback from a viewer (e.g., questionnaires, forms, surveys, and so forth).

The user preferences module 150 can also obtain and store demographics regarding the viewer, at the viewer's discretion. This information can be kept confidential and or shared with third parties according to different embodiments and to provide different capabilities and functionality to the invention. In some embodiments, for example, a viewer can be provided different incentives to share this information, such as the ability to skip and fast-forward through undesired commercials or to obtain more targeted commercials that will be substituted as replacements. It is assumed that a consumer will be more willing to watch a commercial concerning an area of interest rather than a commercial of no interest.

The black box 160 is a piece of hardware and/or protected software that is required to run the decryption software. In some embodiments, the black box 160 enables decryption through the tag decryption module 130, by providing appropriate ciphers or keys and tokens that might be required to perform the decryption.

The privacy scrubber 170 is designed to send approved demographic and viewer-preference information to a third party in such a way as to not violate any known privacy rules and laws. Accordingly, the privacy scrubber 170 can be updated periodically to verify that confidential privacy information is extracted from any transmitted data to third parties. The privacy scrubber 170 can also operate as a simple internet proxy connection to hide viewer identities to third party statistical systems.

It will be appreciated, however, that some embodiments do not require viewing habits, user preferences or privacy scrubber modules. When these features are provided, however, they can help to provide a better user experience if well designed and implemented.

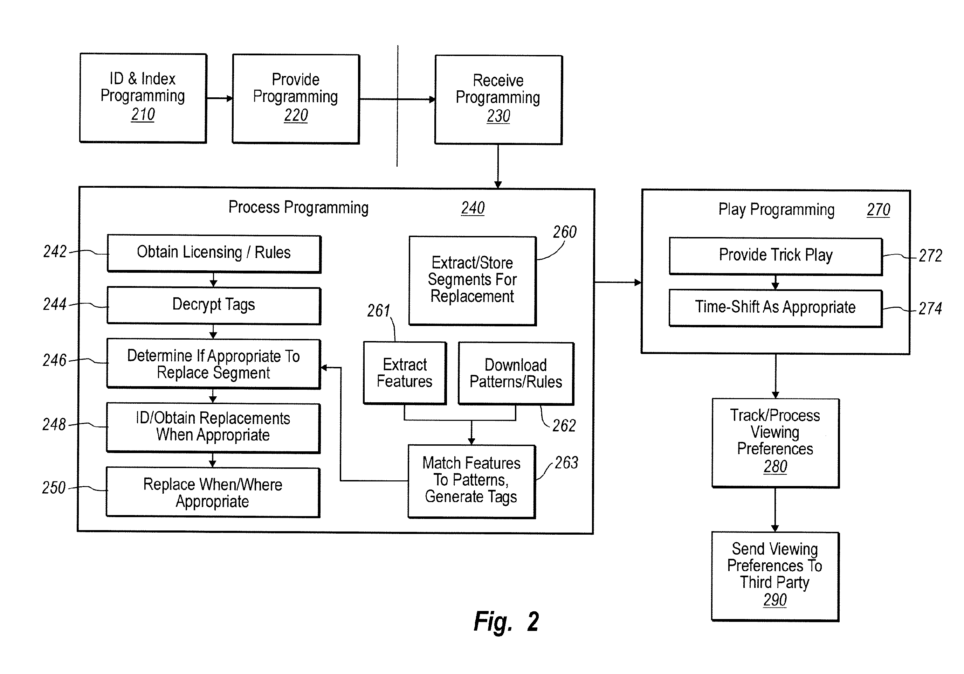

Attention will now be directed to Figure 2, which illustrates a flowchart 200 showing some of the aspects of the invention.

### METHODS FOR USING THE EXTENSIBLE CONTENT IDENTIFICATION AND INDEXING

As shown, one of the methods illustrated in flowchart 200 includes the identification and indexing of programming (210), which is provided (220) to a recipient system. The recipient system can include any system capable of receiving programming. The system illustrated in Figure 1 is one suitable system that can receive the programming (230) provided (220) by one or more third party sources.

In many embodiments of the present invention, the programming that is indexed and identified includes advertisements which, prior to this invention, have not been indexed and identified in such a way as to distinguish them from television broadcast programming that they are embedded within. One reason for this is because advertisers want to prevent the viewer from being able to easily skip over or past the advertisements without the advertiser being able to make a desired impression.

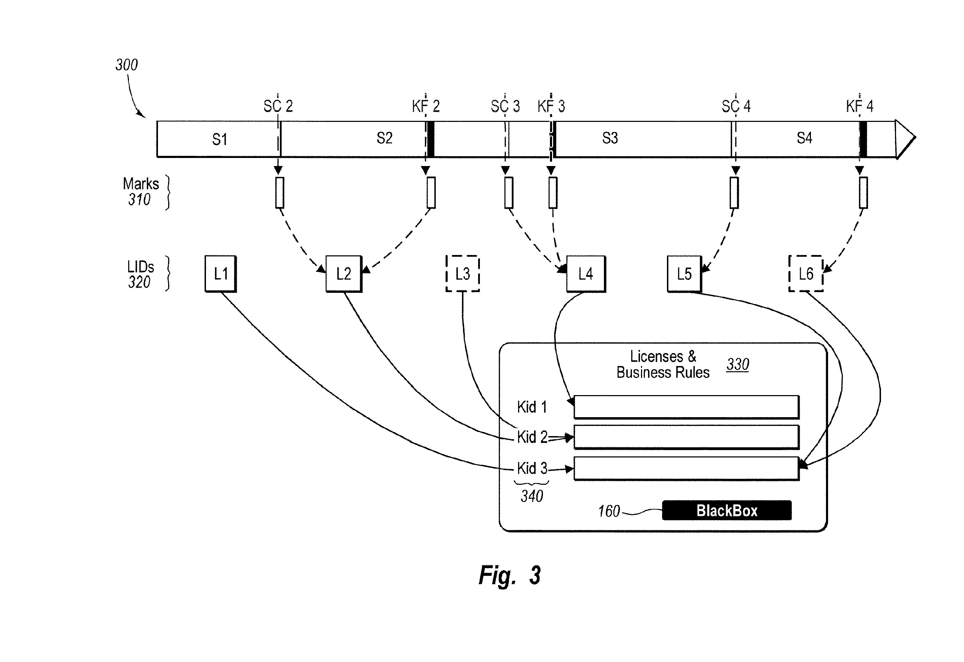

Some of the different techniques for identifying and indexing (210) the advertisements and other programming content according to the present invention will be described in more detail below in reference to Figure 3 and can include identifying and indexing any number and combination of features associated with the programming. This can also include encrypting the identifiers and indexes in such a way that they cannot be accessed and used without consent and the appropriate decryption keys/algorithms.

In some embodiments the programming is provided (220) by an intermediary source that is different than the source that identifies and indexes the programming (210). In other embodiments, the source that identifies and indexes the programming (210) is the same sources that provides it (220) to the recipient system through any combination of network connections.

Once the programming is received, it is processed by the recipient system (240). This step for processing the programming (240) can include various corresponding acts, including, but not limited to the obtaining of licensing and corresponding rules for displaying/replacing/skipping the programming (242), optionally decrypting the tags or other identifying and indexing information data structures (244), determining whether it is appropriate to replace, insert into, or delete segments of the programming (246), identify and obtain replacement segments when appropriate (248), and replace the segments when and where appropriate (250), and extracting and storing segments from the programming for subsequent replacement (260), each of which will now be described in more detail.

Tags or other identifying indexing information data structures may also be generated by extracting basic features from the audio, video, or data streams (261), by downloading and examining patterns of those features and any corresponding rules from a third party source (262), such as, for example, by downloading this information from a web page. The identified features and patterns can then be matched to generate the appropriate and corresponding tags (263). Based on those tags, it can then be determined whether to replace a segment (246), as described in more detail below.

Initially, much of the programming obtained according to the present invention will include optionally encrypted tags, as described above, which contain information that identifies key features of the corresponding programming segments. Another way would be to match unique patterns in the TV signal to create the same tags. In order to decrypt these tags and obtain access to the corresponding identifying information, it is necessary to obtain the appropriate licenses granting access to the information. The licenses can be obtained, as described above, with different modules of the recipient system. In some cases, the licenses must be paid for, such as in a subscription. In other cases, the licenses are free. The licenses can also be provided with the appropriate access codes for decrypting the tags, or may merely enable other modules of the system, which already have the access codes, to perform the decrypting.

Rules can also be obtained with the licenses that specify when and how the programming must be displayed.

Once the appropriate licenses are obtained (242), the tags or other data structures containing the encrypted identifying information are decrypted. The identifying information can then be accessed and used to provide much of the functionality described herein, such as special trick play, relevant and focused advertisement replacement, advertisement skipping with key frame impressions, and many other features.

Although not necessarily, some embodiments also determine whether it is appropriate to replace one or more segments of the programming (246). In this regard, a segment can be multimedia content of any duration, from a single frame to an entire advertisement or program. A segment can also include a plurality of different advertisements or programs. Determining whether it is appropriate to replace one or more segments of the programming (246) can also include determining whether it is appropriate to replace only a portion of a commercial or other program.

The determination as to whether it is appropriate to replace a segment (246) is preferably based on one or more of the following: viewer preferences, subscription levels or plans, demographic information, dynamic conditions (time, weather, season, holiday, day, week, month, location, how old the viewed programming is, how many times it has been viewed at the system or by a viewer, the duration of the program, and so forth), the duration of one or more suitable replacements, media format, whether the programming is being viewed live, or in a recorded or other time-shifted manner, other viewer actions (e.g., input indicating the viewer intends to skip a portion of the programming), and so forth.

Although the term replace suggests the interchanging of different items or segments, the present invention also extends to embodiments for deleting segments from or adding segments to programming as may be desired, or even modifying just parts of it (such as replacing a 1-800 phone number with a more local number if broadcast in that area.). Accordingly, in this regard, replacing can also include adding to, deleting from, or modifying parts of, either exclusively or inclusively.

If it is determined that one or more segments should be replaced, then it is replaced by being added to and/or deleted from the programming as is determined to be appropriate. This can occur simultaneously and dynamically as the programming is being viewed, either live or from a recording. This can also occur to a stored program that is not being viewed; either during the storing process or after the program is already stored. For example, in some embodiments, a timer or expiration attribute can be associated with different programming segments so that they are dynamically replaced according to a predetermined time limit or expiration. Similarly, time attributes can also be used to indicate when a programming segment should be deleted from the scene database or recorded show database to free up storage space.

The processing of programming (240) can also include the extractions and storage of programming segments from the received and/or stored programming for subsequent replacement (260). In many instances, the extracted segments are segments that are initially displayed with the programming when it is received. In other embodiments, the extracted segments can include scripts, text or other content that may or may not be displayed with the programming when it is initially received and displayed. For example, some of this content can be received in the VBI or overscan portions of a broadcast program. The extracted segments can also be extracted transparently to the viewer over one tuner, such as through one channel (*e*.*g*., a dedicated commercial channel), while the viewer watches programming delivered on another channel that is received through another tuner. Once a desired segment is extracted through one or more programming sources, it can be stored in the scene database 121 or any other local or remote repository for subsequent access. The segment is, however, preferably indexed to facilitate its subsequent use.

Once the programming is processed (240), it can be played (270) or otherwise rendered. The playing of the programming (270) can occur in real-time, while it is received, or in any time-shifted manner by being buffered. In some instances, the programming is played with unique and novel trick play functionality (272) in which a segment (e.g., advertisement) is entirely skipped over, but for one or more key frames, as described in more detail below.

In other embodiments, the programming can also be played with time-shifting (274), as suggested above, to accommodate the substitution of programming segments that effectively change the total duration of the programming that is being viewed. For example, if the one or more substitute programming segment(s) turn out to be longer in duration than the substituted segment, the programming can be time-shifted, with known buffering techniques in such a manner that the substitution or modification is transparent to the viewer. In fact, according to many embodiments of the invention, the substitution is done in a relatively seamless manner and such that the viewer is unaware of the substitution, unless they had previous knowledge of the replaced segment(s).

According to some embodiments of the invention, the viewing preferences and behaviors are also tracked (280) while the programming is being played, so as to develop addition data that can be used to provide better and more focused targeting of advertisements and segment replacements.

The viewing preferences can also be sent to a third party (290) in some embodiments, although not necessarily. The amount of viewing preferences sent to a third party can be regulated by law, policy and subscription or plan levels, as generally described above with regard to the user preferences module 150 and the privacy scrubber 170, shown above in Figure 1.

Although many of the foregoing acts and steps described above are shown as occurring in a particular sequence, it will be appreciated that it is not necessary for the illustrated acts and steps to be performed in the order shown. In particular, programming can processed, played and received contemporaneously, such that some of the illustrated acts may actually occur at the same time. Likewise, many of the acts can actually occur in a different order than is presently shown. For example, replacements can be identified and obtained (248) prior to determining whether it is appropriate to replace a segment (246) and even prior to receiving the programming (230).

### EXAMPLES OF TAGS WITH IDENTIFICATION AND INDEXING INFORMATION

Attention will now be directed to Figure 3, which illustrates one embodiment of programming 300 that can be received from any combination of programming sources. It will be appreciated that the programming 300 can also include any combination of multimedia content in any format. Although not necessarily, this programming 300 can include an advertisement, such as a television commercial.

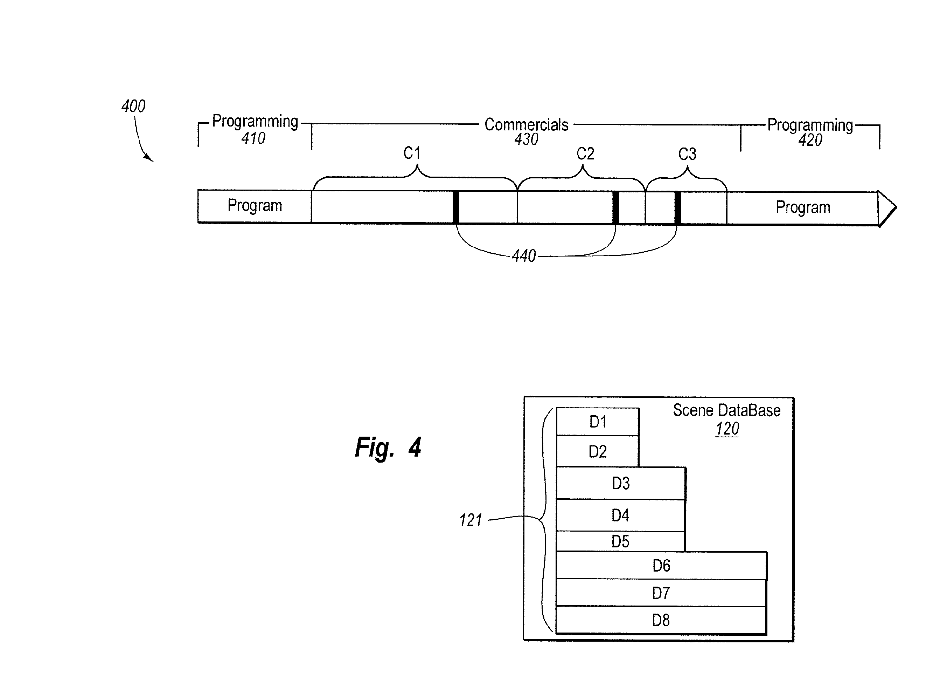

One interesting concept regarding the invention is that segments (or scenes) can be tagged with identifying information regarding their start and/or ending, as well as with enough information to allow for smart replacement. In some embodiments, this provides the possibility of selling replacement rights to an advertiser when advertisements for programming is initially divided up and sold, or at a later time. Examples of some types of scene and advertisement replacements will be provided below with specific regard to Figure 4.

However, because NTSC video line 21 provides only limited bandwidth, it is sometimes necessary to provide a tag structure that is somewhat compact. It is also desirable to at least encrypt enough of the tag so as to prevent unauthorized use of the identifying features enclosed therein that can help provide some of the desired functionality of the invention.

According to one embodiment, the tagging scheme of the present invention is a two part tagging scheme. The first part includes a license identifier, or LID, that provides the general tag encryption and business rules (e.g., for replacement) information. The second part of the two part tag comprises a MARK, which is a bit smaller than the LID and provides the actual information regarding the upcoming scene or segment. Accordingly, the LID can be sent less frequently than the Mark.

In another embodiment, features are extracted out of the audio, video, or data streams, and combined to form unique patterns, which are then matched into a data base that provides the same information and timing held in the LID's and Marks above. It should be appreciated that in such an embodiment, with such a data base , no additional information needs to be sent in the VBI stream.

In embodiment shown in Figure 3, programming 300 has been marked with various identifying features, including Marks 310 and LIDs (License Identifiers) 320. These identifying features, which comprise parts of the tags, as described above, can be decrypted and used to provide the functionality described herein. It will be appreciated, however, that it is not necessary for the entire tag to be encrypted. Accordingly, any portion(s) of the corresponding Marks 310 and LIDs 320 can be encrypted and subsequently decrypted by the system for use thereof In some instances, decryption involves the use of the licenses & business rules' module 330 and the black box 160 described above, in addition to the tag decryption module 130 and any combination of other modules provided by the system 100.

The programming stream 300 is shown to include four different segments (S1 to S4). However, it will be appreciated that programming can include any number of different segments. Likewise, programming stream 300 can also be referred to as a segment, composed of several different segments.

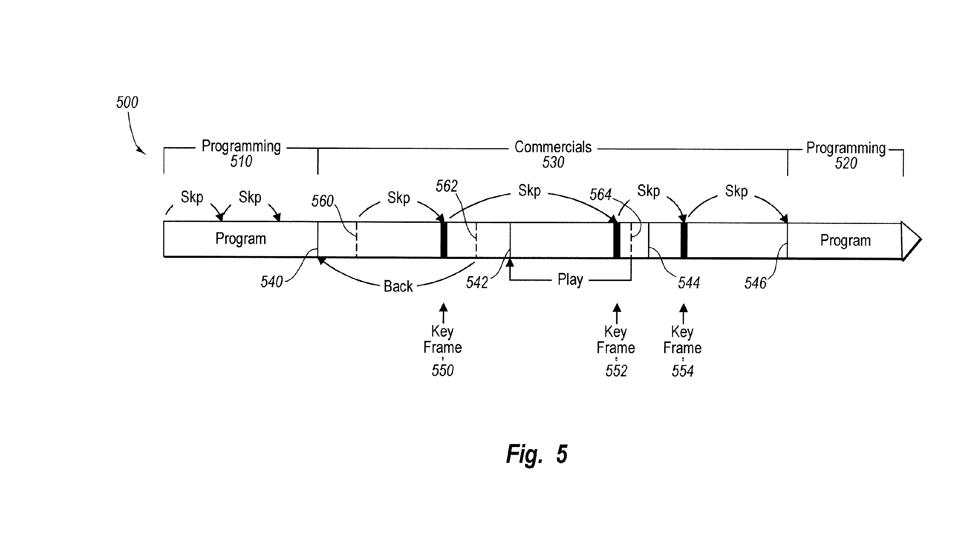

Each segment in the stream is identified by a scene change point (SC-2 to SC-4), and may contain zero or more Key Frames (KF-2 to KF-4). The Key Frames, which compose part of the tagged information, can be encrypted when it is transmitted with the tag. Key Frames and their functionality will be described in more detail below with specific reference to Figure 5 and the advanced trick play functionality provided by the invention.

'Tags' are used in this document are any information describing the TV data and are usually time dependent. Two particular types of Tags are simple Marks and License Identifiers (LIDS). Each of the illustrated Marks reference a LID, which references a license. Interestingly, a Mark can actually reference a LID that is delivered after the mark (see Mark (SC-2 or SC-3)). Although this can be suitable in recorded or time-shifted files, it is preferable for the Marks to reference LIDs that have already been delivered in a live broadcast. Otherwise, it will be difficult to perform the scene replacement described herein. However, if the system is able to obtain a license prior to obtaining the Mark, it may still be possible to perform the scene replacement even in these situations.

Although many different data structures can be used to provide the identifying features contained in a tag, a couple of non-limiting examples will be provided that show data structure fields that can be incorporated into the LIDs and Marks.

The following is one example of the data provided in a LID data structure:

**LID**

| Name | Size (bytes) | Description |
|---|---|---|
| KID | 16 | ID to map License used to decrypt data |
| Salt | 2 | Used in encryption algorithms |
| Flags | 2 | Various Flags describing this LID |
| ES_Offset | 1 | Encryption segment byte offset |
| *SID* | 16 | Unique ID to identify this segment |
| *GSID* | 16 | Unique ID to identify group this segment belongs in. |
| *MID* | 1 | Mapping for Mark to LID |
| *Type* | 1 | Generic type of mark |
| *Size of Data* | 1 | Buffer length |
| *Data* | 0-255 | Arbitrary data. |

Some of the named elements of the LID (e.g., the SID, GSID... Data) are shown in italics to indicate data that is encrypted. However, as mentioned above, any portions of the LID can be encrypted. In some embodiments, the LID has a size of between 40 and 40+225 bytes. However, other sizes can also be used.

As shown above, the presently embodied LID contains two unique ID's. The first is a Key Identifier, or KID 340, which is typically unencrypted and used to identify and reference the license used to decrypt the rest of the data in the tag stream. The second is a Segment Identifier or SID, which identifies the particular segment the LID corresponds to. This is used for matching and replacement algorithms by the modules described above. The LID also contains a semi-unique Mark ID (MID) that the shorter Marks use to reference their way into the LID and from there into the License Stream.

The following is one example of the data provided in a Mark data structure:

| Name | Size (bytes) | Description |
|---|---|---|
| MID | 1 | Maps to LID |
| ES_Offset | 1 | Encryption segment byte offset |
| *Type* | 1 | Generic type of mark |
| *Size of Data* | 1 | Buffer length or 1 byte of data depending on type |
| *Data* | 0-255 | Arbitrary data. |

The Marks are similar to the LIDS, but correspond to shorter segments or scenes within a programming segment that the LID corresponds to. Accordingly, the Marks typically occur more often than the LIDS. For this reason, they are also preferably shorter.

In the forgoing structure showing elements of the Mark, some of the elements are italicized, as before, to indicate data that will likely be encrypted. However, as mentioned before, any portions of the Mark can be encrypted, such that this example should not be construed as limiting the scope of the invention.

The tags, which contain the identifying features, can be provided with the programming through any NTSC line, including line 21, or any alternative lines, such as the line used by Nielsen. The tags can also be encrypted with a block cipher or any other cipher to prevent their decryption without licensed approval. Different tags corresponding to the same programming can also be provided in the same programming, specifically directed to different demographics, viewer preferences, dynamic conditions, subscription levels or any other criteria. The system can then determine which tags to decrypt depending upon data provided by the system regarding those criteria.

In some embodiments, tags can also be obtained independently from the programming they correspond to, with appropriate referencing and indexing information to enable appropriate cross-referencing between the programming and the tags.

In some embodiments, the cross referencing referred to above between the tag and the data can be generated automatically through the features extraction system on the audio, video, or data streams, and a pattern data base providing the rest of the information in the tag (be it a Mark or a LID). These are shown in Figure 2, 261 to 263.

Once the tags have been received and decrypted, if necessary, the identifying features, such as included in the Marks 310 and LIDs 320 can be used to provide some of the functionality described herein regarding scene or segment replacement and advanced trick play functionality, such as with the Key Frames.

### INTELLIGENT SCENE REPLACEMENT

Attention will now be directed to Figure 4, which illustrates another example of a programming stream 400 composed of programming segments 410 and 420 that fall on opposite ends of a commercial segment 430, which includes three discrete commercial advertisements, or commercial segments (C1, C2, C3).

As further illustrated, each of the commercial segments (C1, C2, C3) includes a key frame 440. Although the key frame for each of the commercial segments (C1, C2, C3) is referenced by a single number (440), it will be appreciated that the key frame for each of the commercial segments (C1, C2, C3) will likely, although not necessarily be different. More detailed descriptions of the Key Frames 440 will be provided below in reference to Figure 5.

Figure 4 also illustrates a database 120, such as from system 100 of Figure 1. The database 120 can also be substituted with one or more other databases, however, that are remote and/or local to the system 100, as described above.

As further described above, the database 120 includes a plurality of different substitute or replacement scenes/segments 121 that can be used to replace the one or more commercial segments C1, C2, C3, or programming segments 410 and 420.

In one embodiment, the replacement segments 121 are the same size as the segments they are replacing. For example, segment D2 can replace C3. Likewise, D3, D4 or D5 can replace C2, and so forth. A combination of segment D2 and D8 can also be used to replace C1, for example.

In other embodiments, the replacement segments 121 do not correspond in duration to the segments being replaced. In these circumstances, time-shifting of the programming may be necessary, particularly if the programming is being viewed live or in a real-time broadcast. For example, if segment D3 is used to replace the shorter C3, programming 420 will have to start later. In particular, time-shifting and buffering the programming 420 that follows may be required until a later action enables the programming to catch up.

In other circumstances, a replacement segment 121 may also be smaller than the segment(s) it is replacing. In these cases, it may be necessary to pause until the programming catches up (when the broadcast is being displayed in real-time), or if the programming is recorded programming, then the programming can be adjusted to compensate for the shorter segment in a seamless manner, transparently to the viewer. In the real time case, note that because the key frame is available, the pause could occur on that potentially the most 'interesting' frame.

According to many embodiments of the invention, the replacement of the segments is based on the rules and license agreements associated with the programming. In some instances, the programming may specify what replacement content can be used or when replacements may occur. In other instances, the replacement is left to the discretion of the system and or user. In either case, replacement can also be somewhat intelligent, based on the known or learned viewer preferences, dynamic conditions and any other criteria.

In some embodiments, for example, a car manufacturer may require that replacement commercials are to be used from a known repository of car commercials available to the system and that they are to be replaced after they have been viewed a set number of times. Accordingly, counters and other tracking means can be provided and associated with programming to determine when to replace a segment.

In another example, replacements are based on seasons or holidays, such that a Thanksgiving commercial that is recorded with programming during the Thanksgiving holidays will be replaced by a Christmas commercial if the program is still recorded on the system during the Christmas season. It will be appreciated, however, that actual replacement is not necessary, as described above. Instead, references and pointers to the different commercials and segments can be used to play the replacements without having to overwrite the original(s). It should also be appreciated that the replacement can occur automatically, and irrespective of whether the program is being viewed or, alternatively, only in a dynamic fashion when the programming is being viewed or recorded to a transfer media (e.g., VCR cassette or DVD).

Intelligent replacement can also be based on time or any other dynamic factor. In one example, a breakfast commercial is replaced by a dinner commercial when an early morning broadcast is recorded and later played during the evening.

Seasonal conditions (e.g., weather), explicit viewer preferences, and any other factors can also be considered and used to determine what replacement segments to use.

Although the foregoing examples and description lend themselves to an assumption that the segments of programming that are replaced are original segments delivered with the programming, this is not necessarily true. In particular, the segments within the programming may actually comprise previous replacement segments that replaced original or other replacement segments.

### ADVANCED TRICK PLAY FUNCTIONALITY

Attention will now be directed to Figure 5, which illustrates another example of a programming stream 500, having programming 510, 520 and commercial 530. In this embodiment, there are three distinct commercials that are identified by starting points 540, 542 and 544. The first commercial, for example, begins at point 540 and ends at point 542. The second commercial begins at point 542 and ends at point 544. The last commercial beings at point 544 and ends at point 546. Each of the three commercials also has a corresponding key frame, 550, 552 and 554, respectively.

According to one embodiment of the invention, the key frames 550, 552 and 554 are identified by the advertiser as one or more multimedia images, clips, audio sounds, or combinations thereof that are determined to be an important 'key frame' or 'key frames' that the advertiser would like consumers to see or hear, particularly when the consumer is only going to pay attention to a portion of the commercial.

According to one aspect of the invention, the key frame is a frame or combination of frames that will be rendered by the user's system when the programming is played, even if the rest of the corresponding commercial is skipped over. In particular, the identifying features of the programming and commercials will enable a system to skip over the commercials because they will be distinguished from the other programming they are provided with. Even more particularly, the knowledge regarding the specific beginning and ending of a commercial will enable the commercial to be skipped over. Accordingly, this information is preferably encrypted with the tagging scheme described above, such that it is only made available according to licenses and rules.

In some instances, the licenses and rules specify that all of the commercial can be skipped over, except for the key frame. Accordingly, the present invention can enable a viewer to skip over a commercial with the single press of a button, or automatically, depending on system settings, but for the key frame within the commercial.

For example, suppose a viewer is watching programming 500, and is currently at point 560 (25% of the way into the first commercial). At this point 560, the viewer can hit skip or advance, or the system can be preprogrammed with instructions to automatically advance. Any of the forgoing instructions will cause the programming to automatically advance to point 550, which is a key frame, thereby skipping all of the other content therein between.

During this process, the key frame 550 will be displayed for a predetermined period of time before the programming can be advanced any further, either automatically or in response to additional input. After displaying the key frame for the predetermined period of time, the programming can then be advanced to the end of the commercial 542 or to the next key frame within the same segment or a different segment, and according to the received instructions. In this way, advertisers can still obtain desired impressions with their commercials.

It is also possible for a programming segment to have many key frames, although Figure 5 only illustrates a single key frame per segment. If multiple key frames are present, the skipping process may require any combination of the key frames be displayed. The key frames that are displayed can also be associated, via tagging, with different rules and criteria that specify how many key frames should be played, when the key frames should be played, and for how long.

In some instances, an advertiser can also identify a plurality of different key frames for a single segment that are each associated with different demographics, viewer preferences, dynamic conditions (e.g., time of day or season), as well as any other criteria.

By way of an example, an advertiser of a superstore might want to identify a key frame showing a child's toy which will be associated with morning viewing criteria. The advertiser might also identify a different key frame showing kitchen appliances that is associated with afternoon and evening viewing criteria or viewer preferences when a parent is likely to be watching. Additionally, different seasonal objects being advertised (e.g., sleds, gloves, shovels, rakes, lawn mowers, suntan lotion, beach toys, and so forth) can be selected to correspond to different dynamic conditions and criteria (*e*.*g*., known local weather data received by the system 100, known seasons, and so forth).

In yet another example, a grocery store commercial showing different foods might select a key frame that shows cereals, which is associated by rules to be used during morning viewing, and a dinner food frame to be used during evening viewing.

Although the key frames are preferably selected from images and sound bits included within the actual programming that is played and viewed, it is also possible for key frames to be associated with data that the viewer would not normally see as part of the programming. For example, key frames can be received with the programming transparently through an overscan or other unseen portion of a broadcast. The key frames can also be received independently of the programming, such as over a different channel (*e*.*g*., commercial channel) that is tuned with a different tuner, and that is not currently being watched. Key frames can also be extracted from previously viewed programming, as described above. However, if the key frames are received separately from the programming, they preferably include reference data for being cross-referenced to and associated with the corresponding programming they are intended to be used with. In these circumstances, key frames can be treated as replacement segments, either overwriting frames within the programming or merely being referenced and displayed without overwriting existing programming. These key frames can also be stored within the scene database 120.

In another aspect of the invention, the information regarding the location of the beginning of an advertisement can also be used to provide improved trick play functionality. For example, assume that a viewer is watching programming 500 and is currently at point 562 of a commercial that is being displayed. At that point the viewer, for any reason, decides they want to watch the commercial again. The viewer can simply press rewind to indicate an interest in watching the commercial again and the programming will responsively and automatically go back to point 540, the beginning of the commercial. The play button can also be used to do the same thing in some embodiments. For example, a viewer watching programming at point 564 can hit play to automatically skip back to the beginning of the commercial at point 542. In other embodiments, this trick play functionality will advance the viewer back to the nearest or, alternatively, first key frame in a segment.

Different functionality can also be provided to enable a viewer to select a button on their controller that indicates the viewer has additional interest in a viewed commercial. In such embodiments, and in response to appropriate user input recognized by the system, a substitute commercial or additional information segments can be added to or used to replace other segments in the programming in such a way as to provide the viewer additional information about the advertised product.

In summary, the present invention provides unique methods, systems and computer program products for providing content identification and indexing. Through the present invention, a common ground between the needs of advertisers to make desired impressions with their advertisements and the desires of consumers to be able to conveniently skip over content they are not interested in watching. The present invention also provides means for improving the relevance and focus of targeted advertising based on viewer preferences, dynamic conditions and other criteria.

It will be appreciated, however, that although much of the forgoing description has been provided with regard to substituting advertisements, it will be appreciated that the substituted scenes and segments can also comprise programming other than advertisements. For example, in some embodiments, alternative endings or scenes can be substituted into programming based on viewer preferences, dynamic conditions, and any other criteria, as suggested above. This can be useful, for example, to provide edited scene replacement, or supplemental scene replacement or augmentations. This can particularly be useful in the educational and entertainment industries.

Accordingly, it will be appreciated that the present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A method for rendering programming with intelligent identification and indexing comprising:
receiving programming that includes at least one scene that is associated with a tag that includes at least a first portion that references identifying features of the television scene, including at least a beginning portion of the television scene;
processing the programming to decrypt the first portion when the first portion is encrypted and to access the identifying features;
processing the programming to determine whether it is appropriate to replace or modify the scene; and
upon determining it is appropriate to replace or modify the scene, identifying and obtaining at least one appropriate replacement segment, and replacing or modifying the scene with the at least one appropriate replacement segment.

2. A method as recited in claim 1, wherein the tag is received with the programming.

3. A method, as recited in claim 1, where the tag is computed by first analyzing features in the programming and then matching the features to a pattern received prior to the programming

4. A method as recited in claim 1, where the scene is a commercial.

5. A method as recited in claim 2, wherein the tag includes license information corresponding to a license that specifies at least when or how said commercial can be replaced with one or more substitute programming segments.

6. A method as recited in claim 2, wherein processing the programming to determine whether it is appropriate to replace the commercial includes determining whether it is appropriate to replace only a portion of the commercial.

7. A method as recited in claim 2, wherein determining it is appropriate to replace the commercial and identifying and obtaining at least one appropriate replacement segment is based on dynamic factors received independent of the programming.

8. A method as recited in claim 7, wherein synchronization of the at least one appropriate replacement segment is computed by analyzing features in the programming

9. A method as recited in claim 1, wherein determining it is appropriate to replace the scene and identifying and obtaining at least one appropriate replacement segment is based on viewer preferences.

10. A method as recited in claim 1, wherein obtaining at least one appropriate replacement segment includes extracting the at least one appropriate replacement segment from previously received programming.

11. A method as recited in claim 1, wherein receiving said programming includes recording said programming and accessing the programming from memory at a later time, and wherein said scene in the programming comprises a previous replacement segment that was used to replace at least a previous portion of a scene that was in the recorded programming at one time.

12. A method as recited in claim 1, wherein replacing the scene includes replacing said scene without overwriting said scene in the programming with the at least one appropriate replacement segment.

13. A method as recited in claim 1, further including time-shifting the programming to compensate for said at least one appropriate replacement segment being either longer or shorter than said scene.

14. A method as recited in claim 1, wherein the method further includes replacing the scene dynamically while the programming is played.

15. A method as recited in claim 14, wherein the method further includes replacing the scene while the programming is played from a live broadcast.

16. A method as recited in claim 1, wherein the method further includes extracting and storing replacement segments from the programming to be used for subsequent replacement in other programming.

17. A method as recited in claim 1, wherein the method involves modifying some portion of the programming rather than completely replacing it.

18. A computer program product comprising one or more computer-readable media having computer-executable instructions for implementing a method for rendering programming with intelligent identification and indexing, wherein the method comprises:
receiving programming that includes at least one scene that is associated with a tag that includes at least a first portion that references identifying features of the television scene, including at least a beginning portion of the television scene;
processing the programming to decrypt the first portion when the first portion is encrypted and to access the identifying features;
processing the programming to determine whether it is appropriate to replace or modify the scene; and
upon determining it is appropriate to replace or modify the scene, identifying and obtaining at least one appropriate replacement segment, and replacing or modifying the scene with the at least one appropriate replacement segment.

19. A method for rendering programming with intelligent identification and indexing comprising:
receiving programming that includes at least one segment with a beginning point, an ending point and at least one key frame that are all intended to be displayed to a viewer;
processing the programming to identify the key frame and the beginning point of the programming; and
upon receiving instructions to perform trick mode functionality involving the program segment, advancing to and displaying the key frame, as designated by one or more tags associated with the programming.

20. A method as recited in claim 19, further including:
upon receiving user input to play the programming at any point while the segment is being played, rewinding back to and begin playing of the beginning point of the segment.
